# FASCICULE DE BREVET EUROPEEN

(11) **EP 3 723 982 B1**
(45) Date de publication et mention de la délivrance du brevet: **07.06.2023**
(21) Numéro de dépôt: 18833915.4
(22) Date de dépôt: 11.12.2018
(51) Int. Cl.: B32B 27/08, B32B 17/10, B32B 27/30, B32B 27/36, B32B 27/40

(54) **VITRAGE CHAUFFANT EN MATIÈRE PLASTIQUE STRUCTURALE**
AUS EINEM STRUKTURELLEN KUNSTSTOFFMATERIAL HERGESTELLTE HEIZVERGLASUNG
HEATING GLAZING MADE OF A STRUCTURAL PLASTIC MATERIAL

(30) Priorité: 13.12.2017 FR 1771348
(43) Date de publication de la demande: 21.10.2020
(73) Titulaire: SAINT-GOBAIN GLASS FRANCE, 92400 Courbevoie (FR)
(72) Inventeur: TONDU, Thomas, 45110 Saint-Martin-d'Abbat (FR)
(74) Mandataire: Saint-Gobain Recherche
(86) Numéro de dépôt international: PCT/FR2018/053205
(87) Numéro de publication internationale: WO 2019/115932

(56) Documents cités:
- EP-A1- 0 007 857
- WO-A1-2017/001792

## Description

L'invention concerne un vitrage chauffant à base de matière plastique structurale.

L'invention sera plus particulièrement décrite en regard d'un vitrage chauffant pour une utilisation dans le domaine de l'aéronautique, sans toutefois y être limitée.

Un vitrage d'avion peut intégrer des moyens de chauffage pour éviter les phénomènes de givrage en face externe ou d'embuage en face interne. Les moyens de chauffage sont destinés à chauffer par effet Joule, soit à travers un réseau de fils très minces, soit à travers une couche électriquement conductrice transparente.

Les vitrages latéraux d'avion sont souvent en matière plastique avec plusieurs plis de matière plastique et une intégration des moyens chauffants dans la matière plastique .

L'utilisation de fils chauffants dans un vitrage en matière plastique n'est pas optimale. En effet, Les fils chauffants soumis à des sollicitations mécaniques cycliques telles que de dilatation du vitrage, ou de la pressurisation de l'avion, tendent à se rompre, ce qui limite la durée de vie des vitrages. Par ailleurs, du fait de la faible conductivité thermique des vitrages en matière plastique, la chaleur dissipée par chaque fil est difficilement drainée ce qui entraine des phénomènes de flou optique en chauffe.

Quant aux couches chauffantes déposées sur matière plastique, elles sont industriellement fastidieuses de fabrication du fait qu'il est nécessaire de déposer un vernis avant le dépôt des couches métalliques (la métallisation) pour permettre de lisser la surface de dépôt des couches et d'améliorer l'adhésion de la métallisation. De plus, le dépôt de vernis exige un environnement extrêmement propre, ainsi que des étapes de réticulations thermiques qui sont complexes à maîtriser.

Les couches chauffantes peuvent être par ailleurs déposées sous vide. Toutefois, les dépôts sous vide sur matière plastique sont limités à des températures basses. L'or est souvent choisi pour les couches chauffantes sur plastique, car il peut être déposé à froid et est peu fragile de par sa ductilité naturelle ; néanmoins des couches à base d'or dégradent la transmission lumineuse à travers le vitrage et engendrent un aspect jaune. De plus, les cycles de fabrication de vitrage avec dépôt sous vide, sont allongés par le dégazage des matières plastiques.

Enfin avant feuilletage des différents plis en matière plastique, les plis métallisés étant relativement fragiles et sujet à la rayure, des conditions de manipulation et d'assemblage drastiques sont imposées.

Le document EP 0 007 857 A1 décrit un vitrage chauffant feuilleté comprenant une couche intercalaire en matière plastique dans laquelle sont noyés des fils électriques.

Le document WO 2017/001792 A1 décrit un vitrage chauffant comportant au moins un pli structurel associé à un substrat verrier comportant une couche chauffante. Le substrat verrier est un substrat externe dans le vitrage.

L'invention a donc pour but de proposer un vitrage chauffant qui bien qu'en matière plastique structurale ne présente pas les inconvénients précités.

Selon l'invention, le vitrage chauffant à base de matière plastique rigide structurale comporte au moins un substrat structural en matière plastique et des moyens chauffants destinés à être chauffants par effet Joule en vue du dégivrage et/ou désembuage du vitrage, et est caractérisé en ce qu'il comporte en feuilleté au moins un premier substrat structural en matière plastique, au moins une feuille de verre dotée des moyens chauffants, et au moins un second substrat structural en matière plastique, et en ce que la feuille de verre dotée des moyens chauffants est prise en feuilleté entre les deux substrats en matière plastique.

Ainsi, le vitrage présente l'avantage d'être structurellement en matière plastique, sans avoir les inconvénients suscités de fabrication des moyens chauffants à associer à de la matière plastique, du fait que les moyens chauffants sont déposés préalablement sur du verre qui est ensuite pris en feuilleté entre les deux substrats en matière plastique. La feuille de verre constitue le support de chauffage du vitrage.

Selon une caractéristique, la feuille de verre présente des dimensions surfaciques inférieures à celles des deux substrats structuraux en matière plastique.

Selon une autre caractéristique, les deux substrats structuraux sont espacés l'un de l'autre et sont solidarisés par une couche intermédiaire de matière plastique transparente telle qu'en polyvinylbutyral (PVB) ou en TPU (polyuréthane thermoplastique). La feuille de verre est en particulier solidarisée par ladite couche intermédiaire en matière plastique ; elle est ainsi encapsulée dans la matière plastique qui solidarise entre eux les substrats structuraux, notamment l'épaisseur de ladite couche intermédiaire de matière plastique étant comprise entre 1,2 et 5 mm, de préférence entre 2,5 et 4 mm.

La feuille de verre est rendue solidaire de chacun des substrats structuraux en matière plastique par un film en matière plastique monocouche ou multicouche tel qu'en PVB ou TPU. De préférence, les substrats structuraux en matière plastique présentent chacun une épaisseur comprise entre 5 et 25 mm.

Les substrats structuraux en matière plastique sont par exemple en PMMA (polyméthacrylate de méthyle), ou PU (polyuréthane) ou PC (polycarbonate).

Avantageusement, la feuille de verre est mince, elle présente une épaisseur comprise entre 0,5 et 1,6 mm, de préférence entre 0,5 mm et 0,7 mm.

Avantageusement, les moyens chauffants comprennent au moins une couche mince électriquement conductrice et transparente. L'utilisation d'une couche chauffante permet une meilleure répartition du chauffage, procure une parfaite transparence et évite tout effet de flou par rapport à des fils métalliques, et enfin fournit une durée de vie accrue du vitrage. La couche électriquement conductrice est par exemple à base d'oxyde d'étain, ou d'oxyde d'étain dopé à l'indium ou au fluor, ou bien à base de métal notamment du type or et/ou argent. L'épaisseur de la couche est en particulier comprise entre 50 et 500 nm.

De préférence, la couche chauffante est à base d'ITO, ce qui permet d'obtenir des conductivités optimales par un dépôt à haute température ou par recuit ultérieur du verre supportant ces températures.

Dans un mode de réalisation particulier, le vitrage comporte deux plis constitués des deux substrats structuraux en matière plastique et entre lesquels est feuilleté la feuille de de verre, et au moins un troisième pli, en particulier destiné à être le plus extérieur des plis du vitrage et en regard de l'environnement extérieur en position d'utilisation/montée du vitrage dans sa destination finale, ledit troisième pli étant soit en matière plastique, notamment selon une épaisseur comprise entre 1 et 3mm, ou constitue un substrat en verre de préférence en verre renforcé (par trempe thermique ou chimique), notamment d'épaisseur comprise entre 0,5 et 5 mm, préférentiellement entre 1,5 et 3 mm. Le troisième pli est en particulier rapporté/solidarisé à l'un des substrats structuraux via une couche intercalaire de solidarisation en matière plastique du type PU. De préférence, les dimensions surfaciques dudit troisième pli sont inférieures à celles du substrat structural auquel il est associé.

De préférence, le vitrage comporte au moins une sonde de température agencée entre les deux substrats structuraux en matière plastique, en étant soit solidaire de la feuille de verre sur la face opposée à celle dotée de la couche électriquement conductrice, soit agencée dans l'épaisseur de matière intercalaire séparant les deux substrats structuraux en matière plastique.

L'utilisation d'un verre mince permet avantageusement de placer un capteur de température de type résistance variable contre le verre sur la face opposée à la couche chauffante. Le verre sert alors d'isolant électrique tout en étant un bon conducteur thermique. Ceci permet une régulation fidèle de la température de la couche chauffante tout en évitant les risques de courts-circuits.

Le vitrage selon la présente invention peut également comporter au moins une couche mince fonctionnelle autre que la couche chauffante, par exemple une couche pour la protection solaire ou une couche électro-chrome, plusieurs de ces couches minces fonctionnelles pouvant se présenter sous la forme d'un empilement de couches. La couche fonctionnelle pourrait être appliquée sur la face non chauffante du verre mince, mais dans un tel cas la sonde de température serait plutôt dans la couche intermédiaire en matière plastique et non pas associée à la couche fonctionnelle. En variante, le vitrage pourrait comprendre une seconde feuille de verre prise en feuilleté avec la première feuille de verre entre les deux substrats structuraux en matière plastique, et dotée de la couche fonctionnelle.

Selon une caractéristique particulière, l'ensemble de la périphérie du vitrage forme selon l'épaisseur dudit vitrage un cadre débordant constitué uniquement de matière plastique, ce qui permet la fixation du vitrage comme toute vitrage usuel en matière plastique nécessitant une perforation dans son épaisseur.

De préférence, le vitrage comporte un pli le plus extérieur qui est conçu pour ménager un épaulement périphérique destiné à loger une partie de la structure accueillant le vitrage.

Le vitrage peut être utilisé dans un aéronef, notamment en tant que vitre latérale, en particulier en tant que vitre latérale de cockpit d'avion.

Dans la suite de la description les qualificatifs « extérieur » et « intérieur » sont utilisés dans le cadre d'une installation normale du vitrage dans un habitacle, avec une face tournée vers l'environnement extérieur à l'habitacle et une face tournée vers l'intérieur de l'habitacle.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue schématique en coupe d'un vitrage chauffant selon l'invention ;
- Les figures 2 et 3 sont des vues schématiques en coupe de deux variantes respectives de réalisation du vitrage de la figure 1 ;
- La figure 4 est une vue en coupe schématique du vitrage de la figure 2 fixé dans un habitacle, tel qu'une structure d'avion.

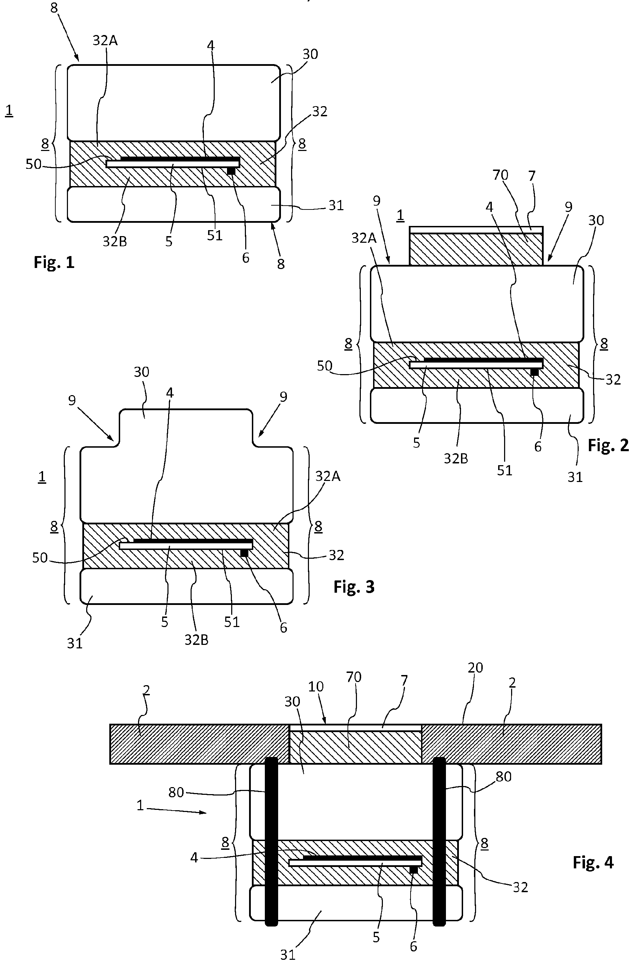

Le vitrage chauffant 1 de l'invention illustré sur les figures 1 à 3 est destiné à être fixé à la structure 2 d'un cockpit d'avion, comme représenté sur la figure 4 pour constituer en particulier une vitre latérale.

Selon l'invention, le vitrage chauffant 1 comprend au moins deux substrats structuraux en matière plastique transparente 30 et 31, une couche intercalaire 32 de matière thermoplastique transparente reliant les deux substrats structuraux, des moyens chauffants 4 comprenant avantageusement une couche électro-conductrice transparente, et un support 5 pour lesdits moyens chauffants, ledit support 5 étant noyé dans la couche intercalaire 32 et formé selon l'invention par une feuille de verre mince.

La structure 2 de l'avion présente une face dite extérieure 20 tournée vers l'environnement extérieur de l'avion.

Les deux substrats structuraux en matière plastique transparente 30 et 31 sont par exemple en PMMA. Le substrat structural 30, dit substrat extérieur car tourné vers l'extérieur de l'avion, présente de préférence une épaisseur par exemple de 14 mm, qui est plus importante que celle du substrat structural 31, dit substrat intérieur cartourné vers l'intérieur, d'épaisseur de 6 mm par exemple.

La couche intermédiaire 32 qui permet de solidariser les deux substrats structuraux est par exemple en PVB ou en TPU. Elle présente par exemple une épaisseur de 3,1 mm. Il s'agit d'au moins deux films du type film PVB afin d'intégrer dans le vitrage la feuille de verre mince 5 et la rendre solidaire.

La feuille de verre 5 est donc prise en feuilleté entre les deux substrats structuraux 30 et 31 au moyen de la couche intermédiaire 32. La feuille de verre 5 est solidarisée par l'une de ses faces 50 au substrat structural extérieur 30 via un film mono ou multicouche en PVB 32A, et par sa face opposée 51 au substrat structural extérieur 31 via un second film mono ou multicouche de PVB 32B.

Selon l'invention, la feuille de verre mince 5 forme un moyen de support pour le dépôt de la couche chauffante 4.

La feuille de verre mince présente par exemple une épaisseur de 0,7 mm.

La couche électro-conductrice transparente 4 est une couche mince déposée de manière connue sur le verre, par exemple par PVD (Physical Vapor Déposition en anglais) ou CVD (Chemical Vapor Déposition en anglais). De préférence, la couche est à base d'oxyde dopé, comme de l'ITO. Elle présente par exemple une épaisseur comprise entre 50 et 800 nm.

La couche chauffante recouvre toute ou partie de l'une des faces 50 de la feuille de verre. La feuille de verre 5 avec sa couche chauffante 4 est disposée dans le vitrage de sorte que la couche chauffante 4 soit en regard du substrat structural extérieur 30.

La couche chauffante 4 est reliée à des bandes ou collecteurs d'amenée du courant, ici non illustrés, destinés à être reliés à une source de courant extérieure au vitrage.

Avantageusement, le vitrage comporte au moins une sonde de température 6 qui est de préférence agencée sur la feuille de verre 5, en particulier sur la face 51 de la feuille de verre opposée à la face 50 portant la couche chauffante 4. La sonde de température comprend par exemple de manière connue des fils fins de résistance variable. En variante, la sonde de température pourrait être placée dans l'épaisseur de la couche intercalaire 32.

Dans l'exemple de réalisation représenté sur la figure 2, le vitrage 1 comporte un troisième pli 7 sur l'extérieur du vitrage et donc de l'avion. Ce pli est formé d'un troisième substrat rigide, par exemple selon une épaisseur comprise entre 1 et 3 mm, en étant soit en matière plastique rigide, tel qu'en PMMA, soit en verre renforcé (par trempe thermique ou chimique). Ce troisième pli 7 est rendu solidaire de la face extérieure du substrat structural extérieur 31 via un intercalaire 70 en matière plastique transparent, tel qu'en PU, par exemple selon une épaisseur de 5 mm. Le vitrage de cet exemple a ainsi davantage de plis que l'exemple de réalisation de la figure 1, et son épaisseur est également plus importante.

Dans l'exemple de réalisation de la figure 3, le vitrage 1 ne comporte que deux plis qui correspondent aux substrats structuraux en matière plastique 30 et 31, mais l'épaisseur du substrat extérieur 30, en particulier en PMMA de 18 mm, est augmentée par rapport à celle de l'exemple de la figure 1.

Pour la fabrication du vitrage, chaque substrat structural 30 et 31, le verre mince 5 (avant dépôt de la couche chauffante 4), le substrat supplémentaire 7 et l'intercalaire 70 sont réalisés aux dimensions et formes souhaitées, puis chaque élément constitutif du vitrage, substrats structuraux, verre mince 5 recouvert de la couche chauffante, éventuellement substrat supplémentaire et son intercalaire, ainsi que les éléments de solidarisation que sont notamment les films 32A et 32B, sont déposés les uns sur les autres en feuilleté, et enfin l'ensemble est passé en autoclave. En variante, la mise aux dimension finales des substrats structuraux 30 et 31 en matière plastique peut se faire après autoclave, en les découpant aux dimensions souhaitées.

Pour assurer la fixation du vitrage 1 de l'invention dans la structure de l'avion (figure 4), la feuille de verre 5 interne à l'épaisseur du vitrage (figures 1 à 3), et le troisième pli 7 et son intercalaire 70 pour l'exemple de la figure 2, présentent des dimensions surfaciques qui sont inférieures aux dimensions surfaciques des substrats structuraux en matière plastique 30 et 31, afin de procurer un cadre périphérique débordant 8 entièrement en matière plastique selon toute l'épaisseur du vitrage pour la traversée uniquement dans la matière plastique de moyens de fixation 80, comme schématisé sur la figure 4.

En outre, afin d'intégrer le vitrage à la structure de l'avion de sorte que la face extérieure 10 du vitrage 1 soit coplanaire avec la face extérieure 20 de la structure de l'avion (figure 4), le troisième pli 7 et son intercalaire 70 de l'exemple de réalisation de la figure 2 présentent des dimensions surfaciques inférieures à celles du substrat structural extérieur 30, et le substrat structural extérieur 30 de la figure 3 présente quant à lui une forme adaptée, pour procurer un épaulement périphérique extérieur 9 dans lequel est logée l'épaisseur de la carlingue 2 de l'avion.

Bien entendu, des joints ici non illustrés sont prévus entre le vitrage et la structure de l'avion.

## Revendications

1. Vitrage chauffant (1) comportant au moins un substrat structural en matière plastique et des moyens chauffants (4), **caractérisé en ce qu'**il comporte en feuilleté au moins un premier substrat structural en matière plastique (30), au moins une feuille de verre (5) dotée des moyens chauffants (4), et au moins un second substrat structural en matière plastique (31), et **en ce que** la feuille de verre (5) dotée des moyens chauffants (4) est prise en feuilleté entre les deux substrats en matière plastique (30, 31).

2. Vitrage selon la revendication 1, **caractérisé en ce que** la feuille de verre (5) présente des dimensions surfaciques inférieures à celles des deux substrats structuraux en matière plastique (30, 31).

3. Vitrage selon la revendication 1 ou 2, **caractérisé en ce que** les deux substrats structuraux en matière plastique (30, 31) sont espacés l'un de l'autre et sont solidarisés par une couche intermédiaire de matière plastique transparente (32) telle qu'en PVB ou PU. entre 1.2 et 5mm, notamment l'épaisseur de ladite couche intermédiaire de matière plastique étant comprise entre 1,2 et 5 mm, de préférence entre 2,5 et 4 mm.

4. Vitrage selon l'une quelconque des revendications précédentes, **caractérisé en ce que** la feuille de verre (5) est rendue solidaire de chacun des substrats structuraux en matière plastique par un film en matière plastique monocouche ou multicouche (32A, 32B) tel qu'en PVB ou PU.

5. Vitrage selon l'une quelconque des revendications précédentes, **caractérisé en ce que** les substrats structuraux en matière plastique (30, 31) présentent chacun une épaisseur comprise entre 5 et 25 mm.

6. Vitrage selon l'une quelconque des revendications précédentes, **caractérisé en ce que** les substrats structuraux en matière plastique (30, 31) sont en PMMA, ou PU ou PC.

7. Vitrage selon l'une quelconque des revendications précédentes, **caractérisé en ce que** la feuille de verre (5) présente une épaisseur comprise entre 0,5 et 1,6 mm, de préférence entre 0,5 mm et 0,7 mm.

8. Vitrage selon l'une quelconque des revendications précédentes, **caractérisé en ce que** les moyens chauffants (4) comprennent au moins une couche mince électriquement conductrice et transparente, en particulier la couche électriquement conductrice étant à base d'oxyde d'étain, ou d'oxyde d'étain dopé à l'indium ou au fluor, ou bien à base de métal notamment du type or et/ou argent.

9. Vitrage selon l'une quelconque des revendications précédentes, **caractérisé en ce qu'**il comporte deux plis constitués des deux substrats structuraux en matière plastique (30, 31) et entre lesquels est feuilleté la feuille de de verre (5), et au moins un troisième pli (7), en particulier destiné à être le plus extérieur des plis du vitrage et en regard de l'environnement extérieur en position d'utilisation du vitrage dans sa destination finale, ledit troisième pli étant soit en matière plastique, notamment selon une épaisseur comprise entre 1 et 3mm, ou constitue un substrat en verre de préférence en verre renforcé, notamment d'épaisseur comprise entre 0,5 et 5mm, préférentiellement entre 1,5 et 3 mm, en particulier ledit troisième pli (7) étant solidarisé à l'un des substrats structuraux via une couche intercalaire (70) de solidarisation en matière plastique du type PU, et de préférence les dimensions surfaciques dudit troisième pli (7) sont inférieures à celles du substrat structural auquel il est associé (30).

10. Vitrage selon l'une quelconque des revendications précédentes, **caractérisé en ce qu'**il comporte au moins une sonde de température (6) agencée entre les deux substrats structuraux en matière plastique (30, 31), en étant soit solidaire de la feuille de verre (5) sur la face opposée (51) à celle dotée de la couche électriquement conductrice (4), soit agencée dans l'épaisseur de matière intercalaire (32) séparant les deux substrats structuraux en matière plastique (30, 31).

11. Vitrage selon l'une quelconque des revendications précédentes, **caractérisé en ce que** l'ensemble de la périphérie du vitrage forme selon l'épaisseur dudit vitrage un cadre débordant (8) constitué uniquement de matière plastique.

12. Vitrage selon l'une quelconque des revendications précédentes, **caractérisé en ce qu'**il comporte un pli le plus extérieur (30, 7) qui est conçu pour ménager un épaulement périphérique (9) destiné à loger une partie de la structure (2) accueillant le vitrage.

13. Vitrage selon l'une quelconque des revendications précédentes, **caractérisé en ce qu'**il est utilisé dans un aéronef, notamment en tant que vitre latérale, en particulier en tant que vitre latérale de cockpit d'avion.

## Patentansprüche

1. Heizverglasung (1), die mindestens ein strukturelles Substrat aus Kunststoff und Heizmittel (4) beinhaltet, **dadurch gekennzeichnet, dass** sie im Verbund mindestens ein erstes strukturelles Substrat aus Kunststoff (30), mindestens eine mit Heizmitteln (4) versehene Glasscheibe (5) und mindestens ein zweites strukturelles Substrat aus Kunststoff (31) beinhaltet und dass die mit Heizmitteln (4) versehene Glasscheibe (5) im Verbund zwischen den zwei Substraten aus Kunststoff (30, 31) aufgenommen ist.

2. Verglasung nach Anspruch 1, **dadurch gekennzeichnet, dass** die Glasscheibe (5) Flächenmaße aufweist, die geringer als die der zwei strukturellen Substrate aus Kunststoff (30, 31) sind.

3. Verglasung nach Anspruch 1 oder 2, **dadurch gekennzeichnet, dass** die zwei strukturellen Substrate aus Kunststoff (30, 31) voneinander beabstandet sind und durch eine transparente Kunststoffzwischenschicht (32) wie etwa aus PVB oder PU zwischen 1,2 und 5 mm fest verbunden sind, wobei die Dicke der Kunststoffzwischenschicht insbesondere zwischen 1,2 und 5 mm, bevorzugt zwischen 2,5 und 4 mm, beträgt.

4. Verglasung nach einem der vorstehenden Ansprüche,
**dadurch gekennzeichnet, dass** die Glasscheibe (5) mit jedem der strukturellen Substrate aus Kunststoff durch eine einschichtige oder mehrschichtige Folie aus Kunststoff (32A, 32B) wie etwa aus PVB oder PU fest verbunden wird.

5. Verglasung nach einem der vorstehenden Ansprüche,
**dadurch gekennzeichnet, dass** die strukturellen Substrate aus Kunststoff (30, 31) jeweils eine Dicke zwischen 5 und 25 mm aufweisen.

6. Verglasung nach einem der vorstehenden Ansprüche,
**dadurch gekennzeichnet, dass** die strukturellen Substrate aus Kunststoff (30, 31) aus PMMA oder PU oder PC sind.

7. Verglasung nach einem der vorstehenden Ansprüche,
**dadurch gekennzeichnet, dass** die Glasscheibe (5) eine Dicke zwischen 0,5 und 1,6 mm, bevorzugt zwischen 0,5 und 0,7 mm, aufweist.

8. Verglasung nach einem der vorstehenden Ansprüche,
**dadurch gekennzeichnet, dass** die Heizmittel (4) mindestens eine elektrisch leitende und transparente dünne Schicht umfassen, wobei die elektrisch leitende Schicht im Besonderen auf Zinnoxid oder indium- oder fluordotiertem Zinnoxid oder aber auf Metall, insbesondere vom Typ Gold und/oder Silber, basiert.

9. Verglasung nach einem der vorstehenden Ansprüche,
**dadurch gekennzeichnet, dass** sie zwei Lagen beinhaltet, die aus den zwei strukturellen Substraten aus Kunststoff (30, 31) bestehen und zwischen denen die Glasscheibe (5) laminiert ist, und mindestens eine dritte Lage (7), die im Besonderen dazu bestimmt ist, die äußerste der Lagen der Verglasung zu sein und in der Verwendungsposition der Verglasung an ihrem endgültigen Bestimmungsort der Außenumgebung zugewandt zu sein, wobei die dritte Lage entweder aus Kunststoff ist, insbesondere gemäß einer Dicke zwischen 1 und 3 mm, oder ein Substrat aus Glas, bevorzugt aus verstärktem Glas bildet, insbesondere mit einer Dicke zwischen 0,5 und 5 mm, bevorzugt zwischen 1,5 und 3 mm, wobei die dritte Lage (7) im Besonderen mit einem der strukturellen Substrate über eine Zwischenlagenschicht (70) zum festen Verbinden aus Kunststoff vom Typ PU fest verbunden ist und die Flächenmaße der dritten Lage (7) bevorzugt geringer sind als die des strukturellen Substrats sind, dem sie zugeordnet ist (30).

10. Verglasung nach einem der vorstehenden Ansprüche,
**dadurch gekennzeichnet, dass** sie mindestens einen Temperaturfühler (6) beinhaltet, der zwischen den zwei strukturellen Substraten aus Kunststoff (30, 31) angeordnet ist, wobei er entweder mit der Glasscheibe (5) auf der zu der mit der elektrisch leitenden Schicht versehenen entgegengesetzten Seite (51) fest verbunden ist oder in der Zwischenlagenmaterialdicke (32) angeordnet ist, die die zwei strukturellen Substrate aus Kunststoff (30, 31) trennt.

11. Verglasung nach einem der vorstehenden Ansprüche,
**dadurch gekennzeichnet, dass** der gesamte Umfang der Verglasung gemäß der Dicke der Verglasung einen überstehenden Rahmen (8) bildet, der nur aus Kunststoff besteht.

12. Verglasung nach einem der vorstehenden Ansprüche,
**dadurch gekennzeichnet, dass** sie eine äußerste Lage (30, 7) beinhaltet, die dazu gestaltet ist, eine umfängliche Schulter (9) auszubilden, die dazu bestimmt ist, einen Teil der die Verglasung aufnehmenden Struktur (2) unterzubringen.

13. Verglasung nach einem der vorstehenden Ansprüche,
**dadurch gekennzeichnet, dass** sie in einem Luftfahrzeug verwendet wird, insbesondere als Seitenscheibe, im Besonderen als Flugzeugcockpit-Seitenscheibe.

## Claims

1. Heated glazing (1) comprising at least one structural substrate made of plastics material, and heating means (4), **characterized in that** said glazing comprises, as a laminate, at least a first structural substrate (30) made of plastics material, at least one glass sheet (5) provided with heating means (4), and at least a second structural substrate (31) made of plastics material, and **in that** the glass sheet (5) provided with the heating means (4) is laminated between the two substrates (30, 31) made of plastics material.

2. Glazing according to claim 1, **characterized in that** the glass sheet (5) has surface dimensions smaller than those of the two substrates (30, 31) made of plastics material.

3. Glazing according to either claim 1 or 2, **characterized in that** the two structural substrates (30, 31) made of plastics material are spaced apart from one another and are secured by a transparent intermediate layer (32) of plastics material such as PVB or PU. between 1.2 and 5 mm, in particular the thickness of said intermediate layer of plastics material being between 1.2 and 5 mm, preferably between 2.5 and 4 mm.

4. Glazing according to any of the preceding claims, **characterized in that** the glass sheet (5) is secured to each of the structural substrates made of plastics material by a single-layer or multi-layer film (32A, 32B) made of plastics material such as PVB or PU.

5. Glazing according to any of the preceding claims, **characterized in that** the structural substrates (30, 31) made of plastics material each have a thickness of between 5 and 25 mm.

6. Glazing according to any of the preceding claims, **characterized in that** the structural substrates (30, 31) made of plastics material are made of PMMA, or PU or PC.

7. Glazing (10) according to any of the preceding claims, **characterized in that** the glass sheet (5) has a thickness of between 0.5 mm and 1.6 mm, preferably between 0.5 and 0.7 mm.

8. Glazing according to any of the preceding claims, **characterized in that** the heating means (4) comprise at least one electrically conductive and transparent thin layer, in particular the electrically conductive layer being based on tin oxide, or on indium- or fluorine-doped tin oxide, or based on metal in particular of the gold and/or silver type.

9. Glazing according to any of the preceding claims, **characterized in that** it comprises two sheets which consist of the two structural substrates (30, 31) made of plastics material and between which the glass sheet (5) is laminated, and at least a third sheet (7), in particular intended to be the outermost of the sheets of the glazing and facing the outside environment in the position of use of the glazing in its final destination, said third sheet being either made of plastics material, in particular with a thickness of between 1 and 3 mm, or constitutes a glass substrate preferably made of reinforced glass, in particular of a thickness of between 0.5 and 5 mm, preferably between 1.5 and 3 mm, in particular said third sheet (7) being secured to one of the structural substrates via a securing interlayer layer (70) made of plastics material of the PU type, and preferably the surface dimensions of said third sheet (7) are less than those of the structural substrate (30) with which it is combined.

10. Glazing according to any of the preceding claims, **characterized in that** it comprises at least one temperature probe (6) arranged between the two structural substrates (30, 31) made of plastics material, by being either secured to the glass sheet (5) on the opposite face (51) to that provided with the electrically conductive layer (4), or arranged in the thickness of interlayer material (32) separating the two structural substrates (30, 31) made of plastics material.

11. Glazing according to any of the preceding claims, **characterized in that** the whole of the periphery of the glazing forms, according to the thickness of said glazing, a projecting frame (8) consisting solely of plastics material.

12. Glazing according to any of the preceding claims, **characterized in that** it comprises an outermost sheet (30, 7) which is designed to provide a peripheral shoulder (9) for housing a portion of the structure (2) that receives the glazing.

13. Glazing according to any of the preceding claims, **characterized in that** it is used in an aircraft, in particular as a side window, in particular as an airplane cockpit side window.
